# EUROPÄISCHE PATENTSCHRIFT

(11) **EP 3 259 161 B1**
(45) Veröffentlichungstag und Bekanntmachung des Hinweises auf die Patenterteilung: **02.01.2019**
(21) Anmeldenummer: 16700362.3
(22) Anmeldetag: 13.01.2016
(51) Int. Cl.: B60T 13/567, B65D 6/38, B21D 51/12

(54) **VAKUUM-BREMSKRAFTVERSTÄRKER MIT VERSTEIFTEM GEHÄUSE**
VACUUM BRAKE BOOSTER COMPRISING REINFORCED HOUSING
SERVOFREIN À VIDE COMPORTANT UN BOÎTIER RIGIDIFIÉ

(30) Priorität: 16.02.2015 DE 102015001944
(43) Veröffentlichungstag der Anmeldung: 27.12.2017
(73) Patentinhaber: Lucas Automotive GmbH, 56070 Koblenz (DE)
(72) Erfinder: HOFMANN, Martin, 56743 Mendig (DE); BRAND, Georg, 56729 Nachtsheim (DE); CALVO MARTINEZ, José Manuel, 56642 Kruft (DE)
(74) Vertreter: Schmidt, Steffen J.
(86) Internationale Anmeldenummer: PCT/EP2016/050494
(87) Internationale Veröffentlichungsnummer: WO 2016/131564

(56) Entgegenhaltungen:
- EP-A2- 0 094 344
- DE-A1- 3 031 206
- DE-A1- 3 041 883
- DE-A1- 19 930 886
- DE-A1-102010 001 812
- DE-U1- 9 102 285

## Beschreibung

Die vorliegende Erfindung betrifft einen Vakuum-Bremskraftverstärker für eine Kraftfahrzeugbremsanlage, umfassend ein Gehäuse mit axial gegenüberliegenden Stirnwandbereichen, die über einen Umfangsbereich miteinander verbunden sind, wobei die Stirnwandbereiche jeweils wenigstens eine Aufnahmeöffnung zur Aufnahme bremskrafteinleitender oder bremskraftabgebender Komponenten aufweisen, wobei in wenigstens einem Stirnwandbereich wenigstens eine Versteifungssicke ausgebildet ist.

Derartige Vakuum-Bremskraftverstärker sind aus dem Stand der Technik bekannt und beispielsweise in den Dokumenten DE 30 31 206 A1, DE 30 41 883 A1 und DE 10 2010 001 812 A1 offenbart. Die Vakuum-Bremskraftverstärker sind dabei im Inneren des Gehäuses typischerweise mit einer Kammeranordnung ausgebildet, bei der eine Arbeitskammer und eine Unterdruckkammer von einer beweglich geführten Trennwand getrennt sind. Die Position der Trennwand kann dabei nach Maßgabe der Auslenkung einer bremskrafteinleitenden Komponente verändert werden, beispielsweise durch die Verlagerung eines Krafteingangsglieds bei Betätigung eines Bremspedals. Dabei entstehen in bekannter Weise Druckdifferenzen an der Trennwand, die eine Servounterstützung des Bremsvorgangs ermöglichen.

Die Gehäuse der Vakuum-Bremskraftverstärker sind typischerweise aus zwei schalenförmigen Gehäusehälften zusammengesetzt, die einen im Wesentlichen kreisförmigen Grundriss aufweisen. Ferner weisen die Gehäusehälften einen eine Grundfläche bildenden Stirnwandbereich auf, an den sich ein abgewinkelter, den Stirnwandbereich umlaufender Ringabschnitt anschließt. Die Gehäusehälften werden entlang einer Betätigungsachse der bremskrafteinleitenden oder -abgebenden Komponenten betrachtet axial gegenüberliegend zueinander angeordnet, so dass die Ringabschnitte dichtend miteinander verbunden werden können und den Umfangsbereich des Gehäuses definieren.

Zielgrößen bei der Konstruktion derartiger Vakuumbremskraftverstärker sind insbesondere die Herstellungskosten und das Gesamtgewicht, welche jeweils möglichst gering zu halten sind. Eine Möglichkeit zum Erreichen dieser Zielgrößen besteht darin, das Gehäuse aus möglichst dünnwandigen Materialien auszubilden, insbesondere aus dünnwandigen Blechen. Eine Verringerung der Materialstärke kann allerdings mit einem Stabilitäts- bzw. Steifigkeitsverlust des Gehäuses einhergehen. Dies ist deshalb kritisch, da das Gehäuse den Druckdifferenzen in seinem Inneren standhalten muss. Ebenso muss es dazu ausgebildet sein, verschiedene mechanische Belastungen zu kompensieren, beispielsweise in Fällen, in denen sich die bremskrafteinleitenden oder -abgebenden Komponenten an dem Gehäuse abstützen.

Um diesen Zielkonflikt zu lösen, ist aus den eingangs genannten Dokumenten das Ausbilden von Versteifungssicken in den Stirnwandbereichen eines Vakuum-Bremskraftverstärkergehäuses bekannt. So offenbart das Dokument DE 30 31 206 A1 ein Gehäuse, das in seinem Stirnwandbereich einen ebenen zentralen Abschnitt und einen diesen umlaufenden kegelstumpfförmigen Gehäuseabschnitt umfasst. In dem kegelstumpfförmigen Abschnitt sind radiale Sicken angeordnet, um die Gehäusestirnwände zu versteifen.

Das Dokument DE 30 41 883 A1 lehrt in ähnlicher Weise, in einem kegelstumpfförmigen Außenbereich einer Gehäusestirnwand radiale Sicken auszubilden. Ebenso sind im Bereich der Aufnahmeöffnung tiefgezogene Rippen angeordnet, die ein komplex verzweigtes Gitterwerk bilden, das die Aufnahmeöffnung vollständig umschließt.

Auch aus dem Dokument DE 10 2010 001 812 A1 sind radiale Sicken in einem kegelstumpfförmigen Außenbereich einer Gehäusestirnwand bekannt. Dabei können benachbarte radiale Sicken an ihren nahe der Aufnahmeöffnung liegenden Enden auch mittels einer sich in Umfangsrichtung erstreckenden Sicke verbunden werden. Die Erstreckung in Umfangsrichtung fällt dabei relativ gering aus.

Es hat sich gezeigt, dass sich mit diesen bekannten Varianten noch keine ausreichend großen Gewichts- und Kosteneinsparungen realisieren lassen. Außerdem kann die erforderliche Steifigkeit des Bremskraftverstärkergehäuses nicht mit ausreichender Zuverlässigkeit gewährleistet werden.

Es ist deshalb Aufgabe der vorliegenden Erfindung, einen Vakuum-Bremskraftverstärker der eingangs bezeichneten Art bereitzustellen, der günstig herzustellen ist, ein geringes Gewicht aufweist und dabei ausreichend stabil ist.

Diese Aufgabe wird durch einen Vakuum-Bremskraftverstärker für eine Kraftfahrzeugbremsanlage gelöst, bei dem vorgesehen ist, dass sich die Versteifungssicke außerhalb eines konzentrisch zu der Aufnahmeöffnung angeordneten Innenkreises erstreckt und ein Innenkreissegment überspannt, das einen Winkel von mindestens ca. 60° und höchstens ca. 180° einschließt.

Im Gegensatz zu den bekannten Varianten aus dem Stand der Technik ist erfindungsgemäß vorgesehen, dass sich die Versteifungssicke über einen definierten Bereich in Umfangsrichtung erstreckt, der die Erstreckungsbereiche der herkömmlichen rein radialen oder mit einem Umfangsabschnitt verbundenen radialen Sicken überschreitet. Gleichzeitig ist erfindungsgemäß vorgesehen, dass die Versteifungssicke die Aufnahmeöffnung nicht vollständig umläuft oder umschließt. In gegenteiliger Weise haben die Erfinder erkannt, dass sich durch das Ausbilden der Versteifungssicke in der vorstehend genannten Weise ein besonders guter Kompromiss aus einer möglichst geringen Materialstärke und einem ausreichend stabilen Gehäuse erzielen lässt.

Erfindungsgemäß kann dabei insbesondere vorgesehen sein, dass die Versteifungssicke ein Innenkreissegment überspannt, das einen Winkel von mindestens ca. 100° und höchstens ca. 160° einschließt. Ebenso kann erfindungsgemäß vorgesehen sein, dass der eingeschlossene Winkel zwischen mindestens ca. 110° und höchstens ca. 140° liegt.

Eine Weiterbildung der Erfindung sieht vor, dass die Versteifungssicke sich im Wesentlichen innerhalb eines ebenen Abschnitts des Stirnwandbereichs erstreckt, wobei der ebene Abschnitt im Wesentlichen orthogonal zu einer Betätigungsachse der bremskrafteinleitenden oder bremskraftabgebenden Komponenten ausgerichtet ist. Im Gegensatz zu den bekannten Lösungen gemäß dem Stand der Technik ermöglicht dies ein Anordnen der Versteifungssicke möglichst nahe an der Aufnahmeöffnung und nicht in einem davon beabstandeten kegelstumpfförmigen Außenbereich. Ferner kann erfindungsgemäß vorgesehen sein, dass die Versteifungssicke mit einem gerundeten, rechteckigen oder V-förmigen Querschnitt ausgebildet ist. Vorzugsweise kann vorgesehen sein, dass die Versteifungssicke vom Inneren des Gehäuses aus betrachtet nach außen aus der Ebene des Stirnwandbereiches hervorsteht. Dies kann dadurch erreicht werden, dass die Versteifungssicke im Rahmen eines Umformprozesses aus einer Ebene des Stirnwandbereiches in Richtung einer Außenseite des Gehäuses heraus gedrückt wird. Das Umformwerkzeug kann dabei in vorteilhafter Weise mit einer gerundeten, eckigen oder V-förmigen Kontur ausgebildet sein.

Ferner kann erfindungsgemäß vorgesehen sein, dass sich die Versteifungssicke linienförmig zwischen zwei Endpunkten erstreckt, wobei die Endpunkte insbesondere auf oder nahe zum Innenkreis angeordnet sind. Ebenso können die Versteifungssicken flächig ausgebildet sein, vorzugsweise jedoch mit einer geringen Breite in radialer Richtung.

Eine Weiterbildung der Erfindung sieht vor, dass sich die Versteifungssicke im Wesentlichen in Umfangsrichtung erstreckt. Gemäß dieser Variante weist die Versteifungssicke überwiegend sich in Umfangsrichtung erstreckende Bereiche auf oder ist sogar vollständig frei von sich rein radial erstreckenden Abschnitten. Beispielweise kann vorgesehen sein, dass der Verlauf der Versteifungssicke in der Ebene des Stirnwandbereiches zu überwiegenden Teilen oder in jedem Punkt eine Krümmung aufweist, die eine Richtungskomponente in Umfangsrichtung enthält. Die Erfinder haben erkannt, dass sich durch eine überwiegende Erstreckung im Umfangsrichtung die angestrebten Steifigkeitsverbesserungen in besonders effektiver Weise erreichen lassen.

Ferner kann erfindungsgemäß vorgesehen sein, dass die Erstreckung der Versteifungssicke eine geöffnete Kontur beschreibt. Mit anderen Worten kann vorgesehen sein, dass der Verlauf der Versteifungssicke in der Ebene des Stirnwandbereichs eine Kontur beschreibt, die kein geschlossenes Profil bildet. Demnach kann die Versteifungssicke eine C- oder U-förmige Kontur in dem Stirnwandbereich beschreiben, nicht jedoch aber eine geschlossene Kontur, wie etwa eine O- oder D-förmige Kontur. Auch damit lassen sich die gewünschten Steifigkeitsverbesserungen in zuverlässiger Weise erzielen.

Eine Weiterbildung der Erfindung sieht vor, dass die Versteifungssicke einen im Wesentlichen radial nach außen gekrümmten Verlauf aufweist. Insbesondere kann vorgesehen sein, dass die Versteifungssicke bezogen auf die Aufnahmeöffnung im Wesentlichen konkav ausgebildet ist. Die Erstreckung der Versteifungssicke im Stirnwandbereich kann beispielsweise im Wesentlichen eine C-förmige Kontur beschreiben, wobei die oberen und unteren Schenkel der C-förmigen Kontur der Aufnahmeöffnung zugewandt sind. Es hat sich gezeigt, dass sich mit einer derart ausgebildeten Versteifungssicke der einleitend beschriebene Zielkonflikt besonders gut lösen lässt.

Eine Weiterbildung der Erfindung sieht vor, dass die Versteifungssicke im Wesentlichen verzweigungsfrei ausgebildet ist. Demnach kann vorgesehen sein, dass sich die Versteifungssicke im Wesentlichen linienförmig entlang einer Längsachse erstreckt und insbesondere keine radialen Verzweigungen aufweist. Es hat sich gezeigt, dass sich dadurch unerwünschte Spannungskonzentrationen an den Verzweigungsstellen vermeiden lassen und die gewünschten Steifigkeitsverbesserungen zuverlässig erzielt werden können.

Gemäß einer Weiterbildung der Erfindung kann vorgesehen sein, dass sich die Versteifungssicke mit einem kurvenförmigen Verlauf entlang einer Mittellängsachse erstreckt. Die Mittellängsachse kann insbesondere linienförmig ausgebildet sein und die Versteifungssicke kann sich im Rahmen ihres kurvenförmigen Verlaufs oberhalb und unterhalb (bzw. radial innerhalb und außerhalb) von der Mittellängsachse erstrecken und/oder diese kreuzen. Mit anderen Worten kann vorgesehen sein, dass die Versteifungssicke ihren Krümmungsgrad entlang ihres Verlaufs lokal ändert, sich aber stets entlang der Mittellängsachse erstreckt. Bildlich gesprochen sieht diese Weiterbildung vor, dass der Verlauf der Versteifungssicke um die Mittellängsachse "oszilliert". Die Mittellängsachse kann insbesondere derart angeordnet sein, dass sich die Versteifungssicke zu gleichen Anteilen oberhalb und unterhalb der Mittellängsachse erstreckt. Insgesamt kann die Mittellängsachse somit die wesentliche Erstreckung bzw. die makroskopisch betrachtete Haupterstreckung der Versteifungssicke innerhalb des Stirnwandbereichs definieren.

In diesem Zusammenhang kann ferner erfindungsgemäß vorgesehen sein, dass die Mittellängsachse ein Kreisbogensegment bildet. Das Kreisbogensegment kann dabei insbesondere konzentrisch zum Innenkreis angeordnet sein.

Bei einer Weiterbildung der Erfindung ist vorgesehen, dass sich die Versteifungssicke zwischen wenigstens zwei Endpunkten erstreckt und nahe zumindest eines Endpunktes mit wenigstens einem um eine radial verlaufende Krümmungsachse gekrümmt ausgebildeten Teilabschnitt versehen ist. Gemäß dieser Variante kann vorgesehen sein, dass die Versteifungssicke ihr Krümmungsverhalten nahe den Endpunkten lokal bzw. abschnittsweise derart ändert, dass sie radial nach außen oder nach innen gekrümmt ist. Dabei können die Teilabschnitte insbesondere halb- oder viertelbogenförmige Abschnitte der Versteifungssicke bilden. Es hat sich gezeigt, dass sich mit entsprechend radial gekrümmten Teilabschnitten nahe den Endpunkten eine bevorzugte Steifigkeitsverbesserung erzielen lässt.

In diesem Zusammenhang kann ferner vorgesehen sein, dass der wenigstens eine gekrümmt ausgebildete Teilabschnitt ein Innenkreissegment überspannt, das einen Winkel von mindestens ca. 10° und höchstens ca. 30° und vorzugsweise von ca. 15° einschließt.

Ferner kann erfindungsgemäß vorgesehen sein, dass die Versteifungssicke nahe wenigstens eines Endpunktes wenigstes zwei radial gekrümmte Teilabschnitte mit entgegengesetzten Krümmungen aufweist. Mit anderen Worten kann vorgesehen sein, dass sich die Versteifungssicke nahe wenigstes eines Endpunktes mit einem wellen- oder S-förmigen Abschnitt erstreckt, wobei dieser Abschnitt insbesondere innerhalb eines Bogenringsegments verlaufen kann. Vorzugsweise kann dabei vorgesehen sein, dass die Versteifungssicke nahe wenigstens eines Endpunktes drei radial gekrümmte Teilabschnitte aufweist, die gegenüber dem jeweils benachbarten Teilabschnitt entgegengesetzt gekrümmt sind. Beispielsweise kann der am nächsten zum Endpunkt angeordnete Teilabschnitt radial nach außen gekrümmt sein, der sich daran anschließende Teilabschnitt radial nach innen gekrümmt sein und der darauffolgende dritte Teilabschnitt wiederum radial nach außen gekrümmt sein. Bei den Varianten mit mehreren radial gekrümmten Teilabschnitten nahe den Endpunkten kann erfindungsgemäß allgemein vorgesehen sein, dass diese Teilabschnitte jeweils im Wesentlichen betragsgleiche Innenkreissegmente überspannen.

Eine Weiterbildung der Erfindung sieht vor, dass die Versteifungssicke mit einem im Wesentlichen krümmungsfreien Mittelabschnitt ausgebildet ist. Dabei kann vorzugsweise vorgesehen sein, dass der Mittelabschnitt entlang des Verlaufs der Versteifungssicke mittig zwischen den Endpunkten angeordnet ist. Ferner kann erfindungsgemäß vorgesehen sein, dass sich die Versteifungssicke ausgehend von dem krümmungsfreien Mittelabschnitt mit einem gekrümmten Verlauf in Richtung der Endpunkte erstreckt, insbesondere mit einem wellenförmigen Verlauf. Der Mittelabschnitt kann außerdem ein Innenkreissegment mit einem Winkel von ca. 60° einschließen. Diese Weiterbildung hat sich ebenfalls als besonders geeignet zum Lösen der erfindungsgemäßen Aufgabe erwiesen.

Erfindungsgemäß kann ferner vorgesehen sein, dass die Versteifungssicke spiegelsymmetrisch zu einer durch den Mittelpunkt der Aufnahmeöffnung verlaufenden ersten Symmetrieachse ausgebildet ist. Es hat sich gezeigt, dass sich mit einer derart ausgebildeten Versteifungssicke eine besonders gleichmäßige Spannungsverteilung innerhalb der Stirnwandbereiche des Gehäuses erzielen lässt.

Ebenso kann erfindungsgemäß vorgesehen sein, dass in dem Stirnwandbereich wenigstens zwei Versteifungssicken ausgebildet sind, die spiegelsymmetrisch zu einer durch den Mittelpunkt der Aufnahmeöffnung verlaufenden zweiten Symmetrieachse angeordnet sind, und insbesondere, dass die zweite Symmetrieachse orthogonal zu der ersten Symmetrieachse angeordnet ist. Durch ein derartiges Anordnen der Versteifungssicken kann die Spannungsverteilung innerhalb der Stirnwandbereiche und die erzielbare Steifigkeit noch weiter verbessert werden. Gemäß dieser Weiterbildung kann beispielsweise vorgesehen sein, dass die geometrischen Formen der Versteifungssicken in dem Stirnwandbereich geöffnete, beispielsweise C-förmige Konturen beschreiben, wobei die C-förmigen Konturen einander zugewandt oder abgewandt sind und beidseits der Aufnahmeöffnung liegen.

Eine Weiterbildung der Erfindung sieht vor, dass der Durchmesser des Innenkreiseses von den Abmessungen eines im Bereich der Aufnahmeöffnung angeordneten Aufnahmebereiches für eine bremskrafteinleitende oder bremskraftabgebende Komponente festgelegt wird. Die bremskrafteinleitenden oder -abgebenden Komponenten können in bekannter Weise an den Stirnwandbereichen des Gehäuses befestigt werden. Beispielsweise kann die bremskraftabgehende Komponente in Form einer Hauptbremszylinderanordnung ausgebildet sein, die in bekannter Weise über einen Befestigungsflansch im Bereich der Aufnahmeöffnung an dem Verstärkergehäuse befestigbar ist. Der Aufnahmebereich kann erfindungsgemäß korrespondierend zu einem aufzunehmenden Befestigungsabschnitt der zugeordneten bremskrafteinleitenden oder -abgebenden Komponente ausgebildet sein. Dadurch, dass der Innenkreis bei dieser erfindungsgemäßen Variante von den Abmessungen des Aufnahmebereichs festgelegt wird, kann gewährleistet werden, dass die Versteifungssicken in einem für die Gehäusesteifigkeit vorteilhaften Abstand zu dem Aufnahmebereich und der Aufnahmeöffnung angeordnet sind.

In diesem Zusammenhang kann erfindungsgemäß ferner vorgesehen sein, dass der Aufnahmebereich wenigstens eine radiale Haupterstreckungsrichtung aufweist und sich die Versteifungssicke im Wesentlichen entlang dieser Haupterstreckungsrichtung erstreckt. Beispielsweise kann vorgesehen sein, dass die Haupterstreckungsrichtung geradlinig in radialer Richtung durch das Zentrum der Aufnahmeöffnung verläuft und die Versteifungssicke sich zwischen zwei Endpunkten in wesentlichen in Umfangsrichtung erstreckt. Dabei kann die Versteifungssicke einen Verlauf beschreiben, der zu überwiegenden Teilen und vorzugsweise in jedem Punkt eine zu der Haupterstreckungsrichtung parallele Richtungskomponente aufweist. Insbesondere kann vorgesehen, dass die Versteifungssicke einen Mittelabschnitt der vorstehend beschriebenen Art umfasst, der sich im Wesentlichen parallel zu der Haupterstreckungsrichtung erstreckt.

Ferner kann erfindungsgemäß vorgesehen sein, dass der Aufnahmebereich mit einer Sicke ausgebildet ist, die den Aufnahmebereich zumindest teilweise umläuft oder aber vollständig umschließt. Dabei kann erfindungsgemäß vorgesehen sein, dass die Sicke des Aufnahmebereichs aus der Ebene des Stirnwandbereichs in das Innere des Gehäuses hervorsteht. In diesem Zusammenhang kann ferner vorgesehen sein, dass die Versteifungssicke in gegenteiliger Weise nach außen aus der Ebene des Stirnwandbereichs hervorsteht. Durch Vorsehen einer zusätzlichen, den Aufnahmebereich umlaufenden Sicke können in Zusammenwirkung mit einer Versteifungssicke gemäß einer der vorstehend beschriebenen Varianten sehr gute Steifigkeitseigenschaften erzielt werden.

Bei einer Weiterbildung der Erfindung ist vorgesehen, dass sich die Versteifungssicke innerhalb eines konzentrisch zu der Aufnahmeöffnung angeordneten Außenkreises erstreckt. Dabei kann insbesondere vorgesehen sein, dass der Außenkreis einen zwischen mindestens ca. 5 cm und höchstens ca. 20 cm größeren Durchmesser aufweist als der Innenkreis. Der Innenkreis und der Außenkreis definieren somit einen Kreisring um die Aufnahmeöffnung, in dem sich die Versteifungssicke erstreckt. Der Kreisring legt dabei insbesondere den radialen Erstreckungsbereich der Versteifungssicke fest. Auch mit dieser Variante lässt sich die Steifigkeit des Gehäuses in der gewünschten Weise verbessern.

Die Erfindung wird im Folgenden beispielhaft anhand der beiliegenden Zeichnungen erläutert. Es stellen dar:
- Fig. 1: eine perspektivische Ansicht einer Gehäusehälfte für einen Vakuum-Bremskraftverstärker gemäß einem Ausführungsbeispiel der Erfindung;
- Fig. 2: eine schematische Darstellung des Herstellungsprozesses zum Ausbilden der Versteifungssicken in der Gehäusehälfte aus Fig. 1; und
- Fig. 3: eine Schnittansicht eines Vakuum-Bremskraftverstärkers gemäß Stand der Technik.

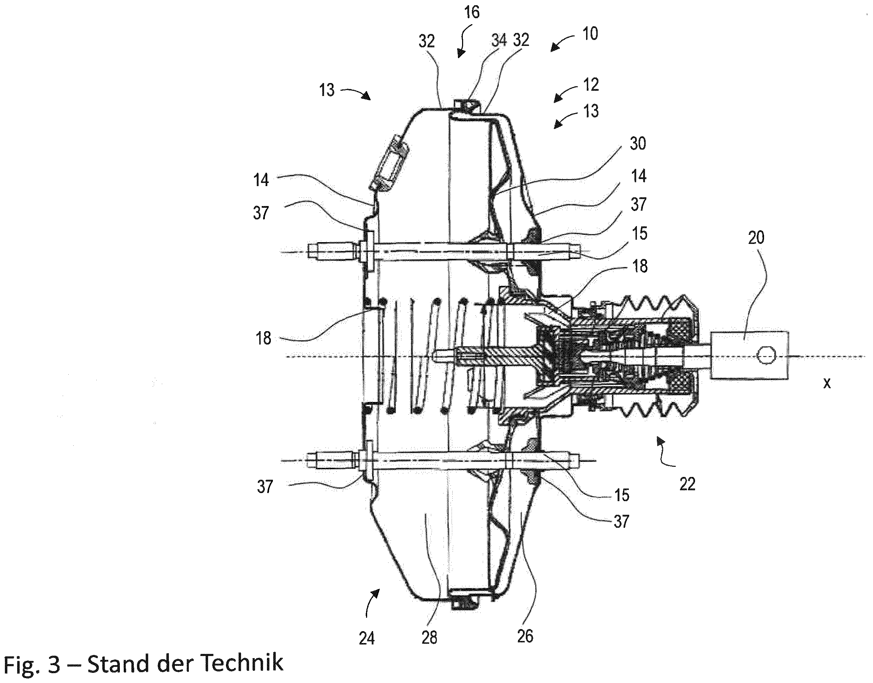

In Fig. 3 ist ein Vakuum-Bremskraftverstärker gemäß einer aus dem Stand der Technik bekannten Bauweise in achsenthaltenden Längsschnitt gezeigt und allgemein mit 10 bezeichnet. Der Vakuum-Bremskraftverstärker umfasst ein Gehäuse 12 mit zwei Stirnwandbereichen 14, die über einen Umfangsbereich 16 miteinander verbunden sind. In den Stirnwandbereichen 14 sind jeweils Aufnahmeöffnungen 18 vorgesehen, die konzentrisch zueinander angeordnet sind und in denen bremskrafteinleitende oder bremskraftabgebende Komponenten aufgenommen werden können. Auf der in Fig. 3 rechten Seite des Gehäuses 12 ist ein Krafteingangsglied 20 gezeigt, das über ein nicht dargestelltes Bremspedal entlang einer Betätigungsachse x verlagerbar ist. Das Krafteingangsglied 20 kann in Zusammenwirkung mit einer Ventilanordnung 22 und einer Kammeranordnung 24 eine Bremskraft an eine in Fig. 3 nicht gezeigte, an dem axial gegenüberliegenden Stirnwandbereich 14 angeordnete Hauptbremszylinderanordnung übertragen. Wie einleitend erläutert, weist die Kammeranordnung 24 eine Arbeitskammer 26 und eine Unterdruckkammer 28 auf, die durch eine bewegliche Trennwand 30 voneinander getrennt sind.

Das Gehäuse 12 ist im gezeigten Fall aus zwei Gehäusehälften 13 zusammengesetzt, die jeweils einen die Stirnwandbereiche 14 bildenden kreisförmigen Grundflächenabschnitt aufweisen. Davon ausgehend sind Ringabschnitte 32 in Richtung der Betätigungsachse x abgewinkelt und umlaufen die Stirnwandbereiche 14 in Umfangsrichtung. Die Ringabschnitte 32 sind in einem Verbindungsabschnitt 34 dichtend miteinander und auch mit der beweglichen Trennwand 30 verbunden. Somit bilden die Ringabschnitte 32 und der Verbindungsabschnitt 34 den Umfangsbereich 16 des Gehäuses 12.

Ferner erkennt man in Fig. 3 zwei Führungsstangen 15 zum Führen der Trennwand 30, die in gegenüberliegenden Öffnungen 36 in den Stirnwandbereichen 14 aufgenommen sind.

Im Folgenden wird eine bevorzugte Gestaltung eines Gehäuses 12 und insbesondere eines Stirnwandbereiches 14 einer Gehäusehälfte 13 gemäß einer Ausführungsform der Erfindung beschrieben. Zum besseren Verständnis werden für gleichartige oder gleichwirkende Komponenten die anhand von Fig. 3 eingeführten Bezugszeichen auch bei der Beschreibung dieser erfindungsgemäßen Ausführungsform verwendet. Aus Gründen der Übersichtlichkeit sind Merkmale die an mehreren Stellen und/oder in symmetrischer Weise innerhalb der abgebildeten Ausführungsform angeordnet sind nicht in jedem Fall mit einem eigenen Bezugszeichen versehen.

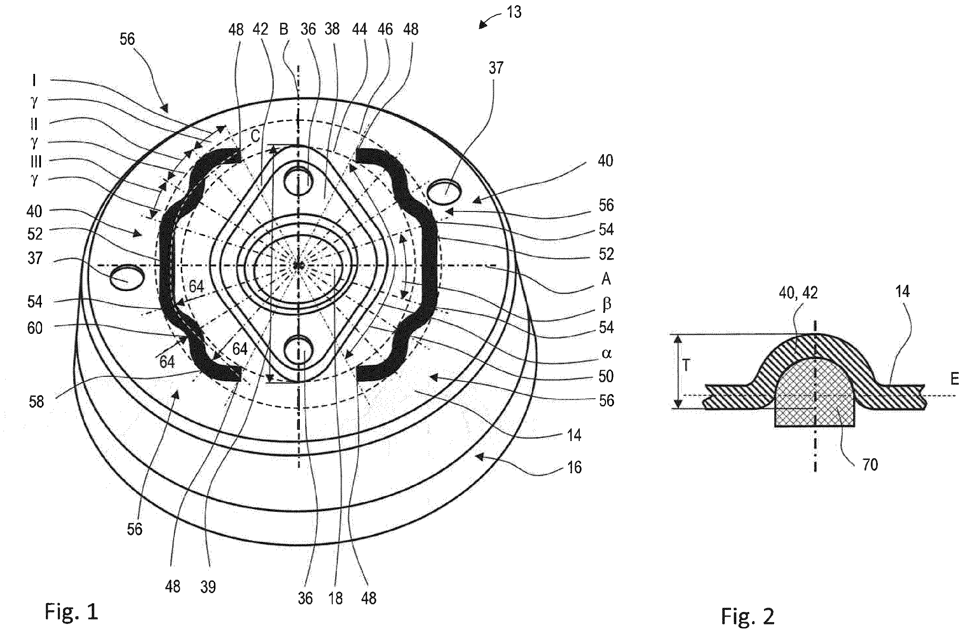

In Fig. 1 ist eine Gehäusehälfte 13 für einen Vakuum-Bremskraftverstärker 10 gemäß einer Ausführungsform der Erfindung gezeigt. Die Gehäusehälfte 13 weist einen Stirnwandbereich 14 sowie einen Ringabschnitt 16 auf. In bekannter Weise ist der Stirnwandbereich 14 mit einem kreisförmigen Grundriss ausgebildet und der Ringabschnitt 16 ist von dem Stirnwandbereich 14 abgewinkelt und erstreckt sich in einer Querrichtung zu dessen Ebene. Der Stirnwandbereich 14 ist im gezeigten Beispiel im Wesentlichen eben ausgebildet, mit Ausnahme der nachfolgend erläuterten Sickenanordnungen 40, 42. Ferner sind in dem Stirnwandbereich 14 Öffnungen 36 zur Aufnahme von Führungsstangen 15 ausgebildet.

In seiner Mitte weist der Stirnwandbereich 14 eine konzentrisch zu seinem kreisförmigen Grundriss angeordnete Aufnahmeöffnung 18 auf. Im gezeigten Fall bildet der Stirnwandbereich 14 bzw. die Gehäusehälfte 13 den einer bremskraftabgebenden Komponente zugewandten Teil des Gehäuses 12, so dass in der Aufnahmeöffnung 18 Komponenten einer herkömmlichen Hauptbremszylinderanordnung aufnehmbar sind.

Im Bereich der Aufnahmeöffnung 18 ist ein Aufnahmebereich 38 ausgebildet, in dem ein nicht dargestellter Befestigungsflansch einer Hauptbremszylinderanordnung aufnehmbar ist. Der Aufnahmebereich 38 umfasst zwei Öffnungen 36, die von Führungsstangen 15 durchsetzt werden, die zum Befestigen einer Hauptbremszylinderanordnung einen herauskragenden Abschnitt aufweisen.

Der Aufnahmebereich 38 ist im Wesentlichen parallelogrammförmig ausgebildet und wird von einer Sicke 42 umschlossen, die sich in analoger Weise parallelogrammförmig um den Aufnahmebereich 38 erstreckt. Dabei ist die umlaufende Sicke 42 derart ausgebildet, dass sie aus der Ebene des Stirnwandbereichs 14 in das Gehäuseinnere 12 hervorsteht. Im Fall von Fig. 1 erstreckt sich die umlaufende Sicke 42 also in die Blattebene hinein.

Der Aufnahmebereich 38 weist ferner eine Haupterstreckungsachse auf, die eine radiale Haupterstreckungsrichtung 39 des Aufnahmebereiches 38 definiert. Die Abmessungen des Aufnahmebereichs 38 (bzw. des Aufnahmebereiches 38 samt umlaufender Sicke 42) entlang der Haupterstreckungsrichtung 39 definieren den Durchmesser eines konzentrisch zu der Aufnahmeöffnung 18 angeordneten Innenkreises 44.

Außerhalb des Innenkreises 44 erstrecken sich zwei Versteifungssicken 40 in dem Stirnwandbereich 14 und stehen dabei aus der Ebene des Stirnwandbereichs 14 hervor. Die Versteifungssicken 40 sind bezogen auf eine Symmetrieachse B zueinander spiegelsymmetrisch ausgebildet, wobei die Symmetrieachse B durch den Mittelpunkt der Aufnahmeöffnung 18 verläuft. Ebenso sind die Versteifungssicken 40 für sich genommen jeweils symmetrisch zu einer Symmetrieachse A ausgebildet, die durch den Mittelpunkt der Aufnahmeöffnung 18 verläuft und orthogonal zu der (Spiegel-)Symmetrieachse B angeordnet ist.

Man erkennt in Fig. 1, dass sich die Versteifungssicken 40 ferner innerhalb eines Außenkreises 46 erstrecken, der ebenfalls konzentrisch zu der Aufnahmeöffnung 18 angeordnet ist und der einen größeren Durchmesser aufweist als der Innenkreis 44. Der Innenkreis 44 und der Außenkreis 46 definieren somit einen Kreisring, in dem sich die Versteifungssicken 40 erstrecken.

Die Versteifungssicken 40 erstrecken sich jeweils linienförmig zwischen zwei Endpunkten 48. Ferner verlaufen sie im Wesentlichen in Umlaufrichtung und sind verzweigungsfrei ausgebildet. Im Fall von Fig. 1 überspannen die Versteifungssicken 40 dabei ein Innenkreissegment 50, das einen Winkel α von 120° einschließt.

Ferner erkennt man, dass die Versteifungssicken 40 einen im Wesentlichen radial nach außen gekrümmten Verlauf aufweisen, wobei die nicht gesondert dargestellten radialen Krümmungsachsen sich jeweils ausgehend vom Mittelpunkt der Aufnahmeöffnung 18 entlang der Symmetrieachse A erstreckt. Durch die Erstreckung zwischen den in Umfangsrichtung beabstandeten Endpunkten 48 beschreiben die Versteifungssicken 40 außerdem eine geöffnete Kontur. Im gezeigten Fall sind die Versteifungssicken 40 im Wesentlichen mit einer C-förmigen Kontur ausgebildet.

Weiterhin wird aus Fig. 1 ersichtlich, dass die Versteifungssicken 40 bei der Erstreckung zwischen den Endpunkten 48 einen kurvenförmigen Verlauf aufweisen und sich dabei entlang einer Mittellängsachse C erstrecken. Die Mittellängsachse C ist dabei derart angeordnet, dass sich die Versteifungssicken 40 zu gleichen Anteilen oberhalb und unterhalb von dieser erstrecken (bzw. zu gleichen Teilen radial außerhalb und innerhalb von dieser) und diese mehrfach kreuzen. Die Mittellängsachse C bildet dabei ein Kreisbogensegment zwischen dem Außenkreis 46 und dem Innenkreis 44, wobei der zu diesem Kreisbogensegment dazugehörige Kreis wiederum konzentrisch zu der Aufnahmeöffnung 18 angeordnet ist.

Der kurvenförmige Verlauf der Versteifungssicken 40 setzt sich im gezeigten Fall aus einem von der Symmetrieachse A geschnitten krümmungsfreien Mittelabschnitt 52 zusammen, an dessen in Umfangsrichtung äußeren Endbereichen 54 sich jeweils wellenförmige Erstreckungsbereiche 56 bis hin zu den Endpunkten 48 anschließen. Der krümmungsfreie Mittelabschnitt 52 überspannt dabei ein Innenkreissegment, das einen Winkel β von 60° einschließt.

Die wellenförmigen Erstreckungsbereiche 56 weisen drei in Umfangsrichtungen ineinander übergehende Teilabschnitte I, II und III auf, die jeweils ein Innenkreissegment überspannen, das einen Winkel γ von 15° einschließt.

Ausgehend von einem Endpunkt 48 erstreckt sich der erste Teilabschnitt I in Umfangsrichtung und radial nach außen gekrümmt zu einem ersten Wendepunkt 58. Der zweite Teilabschnitt II erstreckt sich vom ersten Wendepunkt 58 in Umfangsrichtung und radial nach innen gekrümmt zu einem zweiten Wendepunkt 60. Daran schließt sich der dritte Teilabschnitt III an, der sich wiederum in Umfangsrichtung und radial nach außen gekrümmt erstreckt und in den Endbereich 54 des Mittelabschnitts 52 übergeht, der einen weiteren Wendepunkt bildet.

Somit bilden die Teilabschnitte I, II und III um in Fig. 1 angedeutete radial verlaufende Krümmungsachsen 64 gekrümmte Abschnitte der Versteifungssicken 40 und sind gegenüber ihren benachbarten Teilabschnitten jeweils mit einer entgegengesetzten Krümmung ausgebildet. Ferner bilden die Teilabschnitte I, II und III jeweils einen viertelbogenförmigen Erstreckungsbereich der Versteifungssicken 40.

Insgesamt erkennt man aus Fig. 1, dass sich die Versteifungssicken 40 im Wesentlichen entlang der Haupterstreckungsrichtung 39 des Aufnahmebereiches erstrecken. Dabei verlaufen insbesondere die Mittelabschnitte 52 parallel zu der Haupterstreckungsrichtung 39. Ferner sind die Endpunkte 48 der jeweiligen Versteifungssicken 40 derart angeordnet, dass ihr radialer Abstand im Wesentlichen der radialen Abmessung des Aufnahmebereichs 38 entlang der Haupterstreckungsrichtung 39 entspricht. Mit anderen Worten sind die Endpunkte 48 auf bzw. nahe des Innenkreises 44 angeordnet.

In Fig. 2 ist ferner ein Herstellungsprozess zum Ausbilden der Versteifungssicken 40, 42 aus Fig. 1 schematisch dargestellt. Dabei ist ein Teilbereich des Stirnwandbereichs 14 in einer Querschnittsansicht gezeigt, wobei die Hauptebene E des Stirnwandbereichs 14 orthogonal zur Blattebene verläuft. Man erkennt ein Umformwerkzeug 70 in Form eines Prägestempels, das an seiner dem Stirnwandbereich 14 zugewandten Seite mit einer gerundeten Kontur ausgebildet ist. Das Umformwerkzeug 70 ist dabei in einem in die Stirnwand 14 hineingedrückten Zustand gezeigt und drängt das Material des Stirnwandbereichs 14 in einer Querrichtung aus der Ebene E des Stirnwandbereichs 14 hinaus. Dadurch entsteht eine Versteifungssicke 40, 42 mit einem korrespondierend zur Kontur des Umformwerkzeugs 70 gerundet ausgebildeten Querschnitt. Dieser ist im gezeigten Fall halbkreisförmig. Die Versteifungssicke 40, 42 weist ferner die in Fig. 2 gezeigte Tiefe T relativ zu der Ebene E des Stirnwandbereiches 14 auf.

## Patentansprüche

1. Vakuum-Bremskraftverstärker (10) für eine Kraftfahrzeugbremsanlage, umfassend ein Gehäuse (12) mit axial gegenüberliegenden Stirnwandbereichen (14), die über einen Umfangsbereich (16) miteinander verbunden sind,
wobei die Stirnwandbereiche (14) jeweils wenigstens eine Aufnahmeöffnung (18) zur Aufnahme bremskrafteinleitender oder bremskraftabgebender Komponenten aufweisen,
wobei in wenigstens einem Stirnwandbereich (14) wenigstens eine Versteifungssicke (40) ausgebildet ist,
**dadurch gekennzeichnet, dass** sich die Versteifungssicke (40) außerhalb eines konzentrisch zu der Aufnahmeöffnung (18) angeordneten Innenkreises (44) erstreckt und ein Innenkreissegment (50) überspannt, das einen Winkel (α) von mindestens ca. 60° und höchstens ca. 180° einschließt.

2. Vakuum-Bremskraftverstärker (10) nach Anspruch 1,
**dadurch gekennzeichnet, dass** sich die Versteifungssicke (40) im Wesentlichen in Umfangsrichtung erstreckt.

3. Vakuum-Bremskraftverstärker (10) nach einem der vorangehenden Ansprüche,
**dadurch gekennzeichnet, dass** die Erstreckung der Versteifungssicke (40) eine geöffnete Kontur beschreibt.

4. Vakuum-Bremskraftverstärker (10) nach einem der vorangehenden Ansprüche,
**dadurch gekennzeichnet, dass** die Versteifungssicke (40) einen im Wesentlichen radial nach außen gekrümmten Verlauf aufweist.

5. Vakuum-Bremskraftverstärker (10) nach einem der vorangehenden Ansprüche,
**dadurch gekennzeichnet, dass** die Versteifungssicke (40) im Wesentlichen verzweigungsfrei ausgebildet ist.

6. Vakuum-Bremskraftverstärker (10) nach einem der vorangehenden Ansprüche,
**dadurch gekennzeichnet, dass** sich die Versteifungssicke (40) mit einem kurvenförmigen Verlauf entlang einer Mittellängsachse (C) erstreckt.

7. Vakuum-Bremskraftverstärker (10) nach einem der vorangehenden Ansprüche,
**dadurch gekennzeichnet, dass** die Mittellängsachse (C) ein Kreisbogensegment bildet.

8. Vakuum-Bremskraftverstärker (10) nach einem der vorangehenden Ansprüche,
**dadurch gekennzeichnet, dass** sich die Versteifungssicke (40) zwischen wenigstens zwei Endpunkten (48) erstreckt und nahe zumindest eines Endpunktes (48) mit wenigstens einem um eine radial verlaufende Krümmungsachse (64) gekrümmt ausgebildeten Teilabschnitt (I, II, III) versehen ist.

9. Vakuum-Bremskraftverstärker (10) nach Anspruch 8,
**dadurch gekennzeichnet, dass** die Versteifungssicke (40) nahe wenigstens eines Endpunktes (48) wenigstens zwei radial gekrümmte Teilabschnitte (I, II, III) mit entgegengesetzten Krümmungen aufweist.

10. Vakuum-Bremskraftverstärker (10) nach einem der vorangehenden Ansprüche,
**dadurch gekennzeichnet, dass** die Versteifungssicke (40) mit einem im Wesentlichen krümmungsfreien Mittelabschnitt (52) ausgebildet ist.

11. Vakuum-Bremskraftverstärker (10) nach einem der vorangehenden Ansprüche,
**dadurch gekennzeichnet, dass** die Versteifungssicke (40) spiegelsymmetrisch zu einer durch den Mittelpunkt der Aufnahmeöffnung (18) verlaufenden ersten Symmetrieachse (A) ausgebildet ist.

12. Vakuum-Bremskraftverstärker (10) nach einem der vorangehenden Ansprüche,
**dadurch gekennzeichnet, dass** in dem Stirnwandbereich (14) wenigstens zwei Versteifungssicken (40) ausgebildet sind, die spiegelsymmetrisch zu einer durch den Mittelpunkt der Aufnahmeöffnung (18) verlaufenden zweiten Symmetrieachse (B) angeordnet sind, und insbesondere, wobei die zweite Symmetrieachse (B) orthogonal zu der ersten Symmetrieachse (A) angeordnet ist.

13. Vakuum-Bremskraftverstärker (10) nach einem der vorangehenden Ansprüche,
**dadurch gekennzeichnet, dass** der Durchmesser des Innenkreiseses (44) von den Abmessungen eines im Bereich der Aufnahmeöffnung (18) angeordneten Aufnahmebereiches (38) für eine bremskrafteinleitende oder bremskraftabgebende Komponenten festgelegt wird.

14. Vakuum-Bremskraftverstärker (10) nach Anspruch 13,
**dadurch gekennzeichnet, dass** der Aufnahmebereich (18) wenigstens eine radiale Haupterstreckungsrichtung (39) aufweist und sich die Versteifungssicke (40) im Wesentlichen entlang dieser Haupterstreckungsrichtung (39) erstreckt.

15. Vakuum-Bremskraftverstärker (10) nach einem der vorangehenden Ansprüche,
**dadurch gekennzeichnet, dass** sich die Versteifungssicke (40) innerhalb eines konzentrisch zu der Aufnahmeöffnung (18) angeordneten Außenkreises (48) erstreckt.

## Claims

1. Vacuum brake booster (10) for a vehicle brake device, comprising a casing (12) with two axially opposed end wall sections (14) which are connected to each other through a circumferential section (16),
wherein the end wall sections (14) each have at least one receiving opening (18) for receiving components for receiving a brake force or components for releasing a brake force,
wherein at least one stiffening bead (40) is provided in at least one end wall section (14),
**characterized in that** the stiffening bead (40) extends outside of an inner circle (44) which is arranged concentrically with respect to the receiving opening (18) and spans an inner circle segment (50) which includes an angle (α) of at least 60° and at most 180°.

2. Vacuum brake booster (10) according to claim 1,
**characterized in that** the stiffening bead (40) extends substantially in the circumferential direction.

3. Vacuum brake booster (10) according to any one of the preceding claims,
**characterized in that** the extension of the stiffening bead (40) describes an open contour.

4. Vacuum brake booster (10) according to any one of the preceding claims,
**characterized in that** the stiffening bead (40) has a course which is curved substantially radially outwards.

5. Vacuum brake booster (10) according to any one of the preceding claims,
**characterized in that** the stiffening bead (40) is substantially without branches.

6. Vacuum brake booster (10) according to any one of the preceding claims,
**characterized in that** the stiffening bead (40) extends with a curvilinear course along a longitudinal center axis (C).

7. Vacuum brake booster (10) according to any one of the preceding claims,
**characterized in that** the longitudinal center axis (C) forms a circular arc segment.

8. Vacuum brake booster (10) according to any one of the preceding claims,
**characterized in that** the stiffening bead (40) extends between at least two end points (48) and is provided close to at least one end point (48) with at least one sub-portion (I, II, III) which is curved about a radial axis of curvature (64).

9. Vacuum brake booster (10) according to claim 8,
**characterized in that** the stiffening bead (40) has close to at least one end point (48) at least two radially curved sub-portions (I, II, III) with opposite curvatures.

10. Vacuum brake booster (10) according to any one of the preceding claims,
**characterized in that** the stiffening bead (40) is formed with a substantially curvature-free middle portion (52).

11. Vacuum brake booster (10) according to any one of the preceding claims,
**characterized in that** the stiffening bead (40) is mirror-symmetrical with respect to a first axis of symmetry (A) which runs through the center of the receiving opening (18).

12. Vacuum brake booster (10) according to any one of the preceding claims,
**characterized in that** at least two stiffening beads (40) are formed in the end wall section (14), which stiffening beads are arranged mirror-symmetrically with respect to a second axis of symmetry (B) which runs through the center of the receiving opening (18), and in particular wherein the second axis of symmetry (B) is arranged perpendicularly to the first axis of symmetry (A).

13. Vacuum brake booster (10) according to any one of the preceding claims,
**characterized in that** the diameter of the inner circle (44) is determined by the dimensions of a receiving section (38), arranged in the region of the receiving opening (18), for a component for receiving a brake force or a component for releasing a brake force.

14. Vacuum brake booster (10) according to claim 13,
**characterized in that** the receiving section (18) has at least one radial main direction of extension (39) and the stiffening bead (40) extends substantially along that main direction of extension (39).

15. Vacuum brake booster (10) according to any one of the preceding claims,
**characterized in that** the stiffening bead (40) extends within an outer circle (48) arranged concentrically with respect to the receiving opening (18).

## Revendications

1. Servofrein à dépression (10) pour un système de freinage de véhicule automobile, comprenant un boîtier (12) avec des zones de paroi frontale (14) axialement opposées qui sont reliées entre elles par une zone périphérique (16),
dans lequel les zones de paroi frontale (14) présentent chacune au moins une ouverture de réception (18) pour recevoir des composants d'introduction ou de transmission de force de freinage,
dans lequel au moins une nervure de renforcement (40) est formée dans au moins une zone de paroi frontale (14),
**caractérisé en ce que** la nervure de renforcement (40) s'étend à l'extérieur d'un cercle intérieur (44) disposé concentriquement à l'ouverture de réception (18) et couvre un segment de cercle intérieur (50) qui fait un angle (α) d'au moins environ 60° et d'au plus environ 180°.

2. Servofrein à dépression (10) selon la revendication 1,
**caractérisé en ce que** la nervure de renforcement (40) s'étend sensiblement dans la direction circonférentielle.

3. Servofrein à dépression (10) selon l'une des revendications précédentes,
**caractérisé en ce que** l'extension de la nervure de renforcement (40) décrit un contour ouvert.

4. Servofrein à dépression (10) selon l'une des revendications précédentes,
**caractérisé en ce que** la nervure de renforcement (40) présente un parcours sensiblement incurvé radialement vers l'extérieur.

5. Servofrein à dépression (10) selon l'une des revendications précédentes,
**caractérisé en ce que** la nervure de renforcement (40) est formée sensiblement sans bifurcation.

6. Servofrein à dépression (10) selon l'une des revendications précédentes,
**caractérisé en ce que** la nervure de renforcement (40) s'étend avec un parcours incurvé le long d'un axe longitudinal central (C).

7. Servofrein à dépression (10) selon l'une des revendications précédentes,
**caractérisé en ce que** l'axe longitudinal central (C) forme un segment d'arc de cercle.

8. Servofrein à dépression (10) selon l'une des revendications précédentes,
**caractérisé en ce que** la nervure de renforcement (40) s'étend entre au moins deux points d'extrémité (48) et est pourvue près d'au moins un point d'extrémité (48) d'au moins une sous-partie (I, II, III) incurvée autour d'un axe de courbure (64) s'étendant radialement.

9. Servofrein à dépression (10) selon la revendication 8,
**caractérisé en ce que** la nervure de renforcement (40) présente près d'au moins un point d'extrémité (48) au moins deux sous-parties (I, II, III) incurvées radialement avec des courbures opposées.

10. Servofrein à dépression (10) selon l'une des revendications précédentes,
**caractérisé en ce que** la nervure de renforcement (40) est formée avec une partie centrale (52) sensiblement sans courbure.

11. Servofrein à dépression (10) selon l'une des revendications précédentes,
**caractérisé en ce que** la nervure de renforcement (40) est formée symétriquement par rapport à un premier axe de symétrie (A) passant par le centre de l'ouverture de réception (18).

12. Servofrein à dépression (10) selon l'une des revendications précédentes,
**caractérisé en ce qu'**au moins deux nervures de renforcement (40) sont formées dans la zone de paroi d'extrémité (14), lesquelles sont disposées symétriquement par rapport à un deuxième axe de symétrie (B) passant par le centre de l'ouverture de réception (18), le deuxième axe de symétrie (B) étant en particulier disposé orthogonalement par rapport au premier axe de symétrie (A).

13. Servofrein à dépression (10) selon l'une des revendications précédentes,
**caractérisé en ce que** le diamètre du cercle intérieur (44) est défini par les dimensions d'une zone de réception (38) disposée dans la zone de l'ouverture de réception (18) pour un composant d'introduction ou de transmission de force de freinage.

14. Servofrein à dépression (10) selon la revendication 13,
**caractérisé en ce que** la zone de réception (18) présente au moins une direction d'extension principale radiale (39) et la nervure de renforcement (40) s'étend sensiblement le long de cette direction d'extension principale (39).

15. Servofrein à dépression (10) selon l'une des revendications précédentes,
**caractérisé en ce que** la nervure de renforcement (40) s'étend à l'intérieur d'un cercle extérieur (48) disposé concentriquement à l'ouverture de réception (18).
